# EUROPÄISCHE PATENTSCHRIFT

(11) **EP 3 044 017 B1**
(45) Veröffentlichungstag und Bekanntmachung des Hinweises auf die Patenterteilung: **13.03.2019**
(21) Anmeldenummer: 14755797.9
(22) Anmeldetag: 14.08.2014
(51) Int. Cl.: B60G 11/08, B60G 11/12, F16F 1/368

(54) **LAGERVORRICHTUNG EINER QUERBLATTFEDER, DIE IM BEREICH EINER FAHRZEUGACHSE EINES FAHRZEUGES MONTIERBAR IST**
MOUNTING DEVICE FOR A TRANSVERSE LEAF SPRING, MOUNTABLE IN THE AREA OF AN AXLE OF A VEHICLE
DISPOSITIF DE MONTAGE POUR UN RESSORT À LAME TRANSVERSALE, MONTÉ DANS LA ZONE D'UN ESSIEU D'UN VÉHICULE

(30) Priorität: 10.09.2013 DE 102013218055
(43) Veröffentlichungstag der Anmeldung: 20.07.2016
(73) Patentinhaber: ZF Friedrichshafen AG, 88046 Friedrichshafen (DE)
(72) Erfinder: MOELLER, Matthias, 32257 Buende (DE); WAGNER, Volker, 88212 Ravensburg (DE); RUPFLIN, Thomas, 88719 Stetten (DE)
(86) Internationale Anmeldenummer: PCT/EP2014/067445
(87) Internationale Veröffentlichungsnummer: WO 2015/036199

(56) Entgegenhaltungen:
- EP-A1- 2 604 453
- EP-A2- 0 994 270
- DE-A1-102009 028 574
- DE-A1-102009 028 900
- JP-A- H07 257 131
- US-A- 4 749 206
- US-A- 5 016 861

## Beschreibung

Die Erfindung betrifft eine Lagervorrichtung einer Querblattfeder, die im Bereich einer Fahrzeugachse eines Fahrzeuges montierbar ist, gemäß der im Oberbegriff des Patentanspruches 1 näher definierten Art. Derartige Lagervorrichtungen sind aus der US 5 016 861 A, aus der JP H07 257131 A, aus der EP 0 994 270 A2, aus der EP 2 604 453 A1 und aus der US 4 749 206 A bekannt.

Seit einiger Zeit werden im Fahrzeugbau wieder Blattfedern verbaut, die heutzutage jedoch aus Glasfaserkunststoff hergestellt werden, um die Gewichtseinsparungsanforderungen erfüllen zu können. Dabei sollen derartige GFK-Querblattfedern (Glasfaserkunststoff) auch Radführungsaufgaben übernehmen und drei bislang wesentliche Bauteile einer Fahrzeugachse ersetzen. Diese Bauteile sind eine sogenannte Aufbaufeder, ein Stabilisator und ein Querlenker.

Zur Übernahme der Radführungsfunktionen sind Querkräfte in die GKF-Querblattfeder einzuleiten und über Zentrallager im Bereich der Fahrzeugkarosserie abzustützen. Die Zentrallager stellen immer einen Kompromiss aus Beweglichkeit der GFK-Querblattfeder und der jeweils abzustützenden Querkraft dar. Der für die Herstellung einer GFK-Querblattfeder jeweils verwendete GFK-Werkstoff ist zwar leicht und entsprechend innovativ, erfordert jedoch hinsichtlich der Einleitung der Kraft und der Ausleitung der Kraft entsprechende konstruktive Maßnahmen.

Dies resultiert aus der Tatsache, dass in Abhängigkeit der jeweils vorliegenden Achskinematik unterschiedlich große Lateralbewegungen der GFK-Querblattfeder im Zentrallager auftreten können, die sich mit einer Rotation überlagern, die wiederum während eines Einfedervorganges oder eines Ausfedervorganges der GFK-Querblattfeder auftreten. Eine Kombination dieser Bewegungen verursacht im Bereich der Lagerstellen der GFK-Querblattfeder Lagerkräfte, die dazu führen, dass ein Lagerdesign, welches für eine bestimmte Achskinematik geeignet ist, bei einer anderen Achskinematik völlig unbrauchbar ist und eine frühzeitige Funktionsbeeinträchtigung der GFK-Querblattfeder verursacht.

Aus der DE 10 2009 028 900 A1 ist eine Lagervorrichtung einer Querblattfeder mit einer Lageraußenschaleneinrichtung und mit von der Lageraußenschaleneinrichtung zumindest bereichsweise umgriffenen Einlegeeinrichtungen bekannt, die jeweils Lagenelemente mit unterschiedlicher Steifigkeit aufweisen. Die Einlegeeinrichtungen sind in montiertem Zustand jeweils zwischen der Lageraußenschaleneinrichtung und der Querblattfeder angeordnet. Mit höherer Steifigkeit ausgeführte Lagenelemente sind jeweils zwischen der Querblattfeder und mit niedrigerer Steifigkeit ausgeführten Lagenelementen positioniert. Die mit höherer Steifigkeit ausgebildeten Lagenelemente sind zwischen in axialer Richtung der Querblattfeder orientierten Endbereichen halbschalenförmig und konvex ausgebildet. Die Endbereiche der mit höherer Steifigkeit ausgebildeten Lagenelemente weisen in Bezug auf die Oberfläche der Querblattfeder konkav gekrümmte Bereiche auf, deren freie Enden von der Oberfläche der Querblattfeder weg gerichtet sind. Die an die mit niedrigerer Steifigkeit ausgeführten Lagenelemente und an die Querblattfeder angrenzenden Lagenelemente umgreifen mit ihren freien Enden die mit niedrigerer Steifigkeit ausgeführten Lagenelemente bereichsweise formschlüssig.

Das Lagerdesign der Lagervorrichtung ist symmetrisch aufgebaut, womit eine in Einbaulage der Querblattfeder im Wesentlichen in Fahrzeughoch- und Fahrzeuglängsrichtung verlaufende Querschnittsebene der Querblattfeder im Bereich der Lagervorrichtung beim Ein- und Ausfedern der Querblattfeder um eine im Wesentlichen in Fahrzeuglängsrichtung verlaufende Drehachse verschwenkbar ist, die, ohne unerwünschte Zwangskräfte im Bereich der Querblattfeder zu erzeugen, auslegungsbedingt im Bereich der neutralen Faser der Querblattfeder liegen muss.

Der vorliegenden Erfindung liegt daher die Aufgabe zugrunde, eine Lagervorrichtung einer Querblattfeder, die im Bereich einer Fahrzeugachse eines Fahrzeuges montierbar ist, zur Verfügung zu stellen, mittels der Zwangskräfte im Bereich einer Querblattfeder während eines Ein- und Ausfederns der Querblattfeder reduzierbar sind.

Diese Aufgabe wird mit einer Lagervorrichtung mit den Merkmalen des Patentanspruches 1 gelöst.

Bei der Lagervorrichtung einer Querblattfeder, die im Bereich einer Fahrzeugachse eines Fahrzeuges montierbar ist und mit einer Halteeinrichtung zum Halten der Querblattfeder und mit einer Verbindungseinrichtung ausgebildet ist, in deren Bereich die Halteeinrichtung mit dem Fahrzeug verbindbar ist, sind die Halteeinrichtung, die Verbindungseinrichtung und die Querblattfeder so aufeinander abgestimmt, dass eine in Einbaulage der Querblattfeder im Wesentlichen in Fahrzeughoch- und Fahrzeuglängsrichtung verlaufende Querschnittsebene der Querblattfeder im Bereich der Lagervorrichtung beim Ein- und Ausfedern der Querblattfeder um eine im Wesentlichen in Fahrzeuglängsrichtung verlaufende Drehachse verschwenkbar ist.

Die Halteeinrichtung und die Verbindungseinrichtung sind so ausgeführt, dass die Drehachse der Querschnittsebene der Querblattfeder im Bereich der Lagervorrichtung zur Minimierung von während eines Ein- und Ausfedervorganges der Querblattfeder auftretenden Zwangskräften in Fahrzeughochrichtung von der neutralen Faser der Querblattfeder beabstandet ist.

Der Erfindung liegt die Kenntnis zugrunde, dass die Drehachse bzw. ein Momentanpol der Querschnittsebene der Querblattfeder nicht im Bereich der neutralen Faser der Querblattfeder vorliegt, sondern beabstandet von der neutralen Faser der Querblattfeder ist, da die Querblattfeder üblicherweise in Fahrzeugquerrichtung in gebogener Vorspannlage mit der Fahrzeugkarosserie verbunden ist und es daher formbedingt zur Längung der Feder während eines Einfedervorganges kommt. Die Längung der Querblattfeder verursacht im Zentrallagerbereich bzw. im Bereich der Lagervorrichtung der Querblattfeder Lateralbewegungen, die unter anderem zu einer Verschiebung des Momentpoles gegenüber der neutralen Faser der Querblattfeder im Wesentlichen in Fahrzeughochrichtung führt. Über die asymmetrische bzw. außermittige Zentrallagerung ist die über den gesamten Betriebsbereich der Querblattfeder vorliegende Lastsituation der Querblattfeder trotz der vorbeschriebenen Lateralbewegungen deutlich entspannbar, womit eine Lebensdauer einer Querblattfeder auf konstruktiv einfache Art und Weise verbesserbar ist.

Da der Abstand der Drehachse bzw. des aktuellen Kinematikpunktes der Querschnittsebene der Querblattfeder zur neutralen Faser der Querblattfeder in Abhängigkeit des jeweils vorliegenden Lastfalles variiert, ist das Lagerdesign der Lagervorrichtung vorzugsweise so auszulegen, dass die von der Lagervorrichtung konstruktiv definierte Lage der Drehachse der Querschnittsebene der Querblattfeder in montiertem Betriebszustand der Querblattfeder auslegungsbedingt dort angeordnet ist, für die ein Maximum der Lebensdauer der Querblattfeder ermittelt wird.

Erfindungsgemäß umfasst die Halteeinrichtung zwei miteinander verbindbare Halbschalen, die die Querblattfeder zumindest bereichsweise formschlüssig umgreifen, wobei zumindest eine der Halbschalen mit der Verbindungseinrichtung gekoppelt ist, wobei die Halbschalen der Halteeinrichtung mit Aussparungen zur Aufnahme von konvexen Bereichen der Querblattfeder ausgeführt sind.

Bei einer vorteilhaften Ausführungsform der Lagervorrichtung umfasst die Verbindungseinrichtung jeweils einen mit der Halteeinrichtung verbundenen Verbindungsbereich und einen weiteren Verbindungsbereich, über den die Verbindungseinrichtung mit dem Fahrzeug in Wirkverbindung bringbar ist, und sind die Verbindungsbereiche über einen zusätzlichen Verbindungsbereich miteinander gekoppelt, der mit höherer Elastizität als der Verbindungsbereich und der weitere Verbindungsbereich ausgeführt ist, sind Lateral- und Drehbewegungen der Querblattfeder bei gleichzeitig geringen Zwangskräften möglich und eine Querblattfeder mit geringem Aufwand im Bereich eines Fahrzeuges montierbar.

Ist die Verbindungseinrichtung in Einbaulage der Querblattfeder in Fahrzeughochrichtung zumindest bereichsweise über einer Oberseite der Querblattfeder angeordnet, ist ein größerer Abstand zwischen der Drehachse der Querschnittsebene und der neutralen Faser der Querblattfeder mit geringem Aufwand realisierbar.

Bei einer weiteren vorteilhaften Ausführungsform der Lagervorrichtung ist die Verbindungseinrichtung in Einbaulage der Querblattfeder in Fahrzeuglängsrichtung zumindest bereichsweise vor und hinter der Querblattfeder angeordnet, womit geringere Abstände zwischen der Drehachse und der neutralen Faser darstellbar sind, ohne Anpassungen im Bereich der Gestaltung der Querblattfeder vornehmen zu müssen.

Umfasst die Verbindungseinrichtung jeweils mit den Halbschalen der Halteeinrichtung verbundene und halbzylindrisch ausgeführte sowie sich in Einbaulage der Querblattfeder von dieser in Fahrzeuglängsrichtung weg erstreckende Verbindungsbereiche, die in montiertem Zustand der Halteeinrichtung mit ihren flachen Seiten aneinander anliegen und einen zylindrischen Bereich ausbilden, wobei Mittellinien der zylindrischen Bereiche in Einbaulage der Querblattfeder in Fahrzeughochrichtung versetzt zu einer Symmetrieebene der Halteeinrichtung, die vorzugsweise durch die neutrale Faser der Querblattfeder verläuft, vorgesehen sind und eine Drehachse der Verbindungsbereiche gegenüber den weiteren Verbindungsbereichen darstellen, ist ein Abstand zwischen der Drehachse der Querschnittsebene der Querblattfeder und der neutralen Faser der Querblattfeder im Bereich der Lagervorrichtung auf konstruktiv einfache Art und Weise in beliebigem Umfang unabhängig von der Gestaltung der Querblattfeder einstellbar.

Ist der weitere zusätzliche Verbindungsbereich, der als ein hohlzylindrisches Bauteil ausgeführt ist und vom weiteren Verbindungsbereich umgriffen ist, auf den zylindrischen Bereich aufgeschoben, ist die Lagervorrichtung konstruktiv einfach ausgeführt und mit geringem Aufwand montierbar.

Bei einer besonders einfachen Ausführungsform der Lagervorrichtung weist die Verbindungseinrichtung wenigstens einen mit einer der Halbschalen verbundenen und hohlzylindrisch ausgeführten sowie in Einbaulage der Querblattfeder sich in Fahrzeuglängsrichtung erstreckenden Verbindungsbereich auf, der den ebenfalls hohlzylindrischen weiteren Verbindungsbereich sowie den dazwischen angeordneten zusätzlichen Verbindungsbereich, der auch hohlzylindrisch ausgebildet ist, umfasst. Damit ist die Lagervorrichtung beispielsweise als sogenanntes kosten- und bauraumgünstiges Rundlager ausführbar.

Weist der weitere Verbindungsbereich und der zusätzliche Verbindungsbereich jeweils zwei in Fahrzeuglängsrichtung zueinander beabstandete Teilbereiche auf, wovon einer der Teilbereiche in Fahrzeuglängsrichtung vor der Querblattfeder und der andere Teilbereich hinter der Querblattfeder vorgesehen ist, und umgreifen die Teilbereiche des zusätzlichen Verbindungsbereiches die Teilbereiche des weiteren Verbindungsbereiches und sind diese auf dem Verbindungsbereich angeordnet, der als ein hohlzylindrisches Bauteil ausgeführt ist und sich in Fahrzeuglängsrichtung zwischen den Teilbereichen erstreckt, sind selbst geringe Abstände zwischen der Drehachse der Querschnittsfläche der Querblattfeder und der neutralen Faser der Querblattfeder beispielsweise mit einem sogenannten Rundlager realisierbar, ohne hierfür eine Gestaltung einer herkömmlich ausgeführten Querblattfeder verändern zu müssen.

Weitere Vorteile und vorteilhafte Weiterbildungen der Erfindung ergeben sich aus den Patentansprüchen und den unter Bezugnahme auf die Zeichnung im Prinzip beschriebenen Ausführungsbeispielen, wobei zugunsten der Übersichtlichkeit für bau- und funktionsgleiche Bauteile dieselben Bezugszeichen verwendet werden.

Es zeigt:
- Fig. 1: eine schematisierte Darstellung einer Querblattfeder in Ruhelage;
- Fig. 2: eine im Wesentlichen Fig. 1 entsprechende Darstellung einer Querblattfeder, wobei die Querblattfeder in Ruhelage und im Vergleich dazu in einem gleichseitig eingefederten Betriebszustand dargestellt ist;
- Fig. 3: eine Fig. 2 entsprechende Darstellung einer Querblattfeder in Ruhelage und im Vergleich dazu in einem Betriebszustand, zu dem die Querblattfeder auf einer Seite in ausgefedertem Zustand und auf der anderen Seite in eingefedertem Zustand vorliegt;
- Fig. 4: einen im Bereich einer Lagervorrichtung gelagerten Bereich einer Querblattfeder im Ruhezustand und im Vergleich dazu während eines Federbetriebszustandes, zu dem Enden der Querblattfeder aus ihrem Ruhebetriebszustand herausverschwenkt sind;
- Fig. 5: den im Bereich einer Lagervorrichtung angeordneten Bereich einer Querblattfeder in einer vergrößerten Ansicht und mehrere sich während verschiedener Lastzustände während eines gleichseitigen Einfederbetriebszustandes der Querblattfeder einstellende Drehachsen einer Querschnittsfläche der Querblattfeder;
- Fig. 6: eine Fig. 5 entsprechende Darstellung einer Querblattfeder mit sich in Abhängigkeit verschiedener Lastzustände der Querblattfeder bei wechselseitigem Federbetriebszustand der Querblattfeder einstellenden Drehachsen der Querschnittsfläche der Querblattfeder im Bereich der Lagervorrichtung;
- Fig. 7: eine erste Ausführungsform der Lagervorrichtung einer Querblattfeder in einer perspektivischen Ansicht;
- Fig. 8: eine zweite Ausführungsform der Lagervorrichtung einer Querblattfeder; und
- Fig. 9: eine dritte Ausführungsform der Lagervorrichtung einer Querblattfeder.

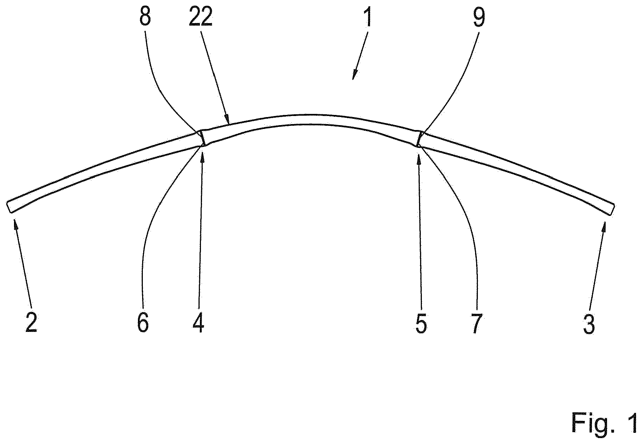

Fig. 1 zeigt eine schematisierte Darstellung einer Querblattfeder 1 die im Bereich einer Fahrzeugachse eines Fahrzeuges im Wesentlichen in Fahrzeugquerrichtung verlaufend montierbar ist. Die Querblattfeder 1 ist in ihren Rädern der Fahrzeugachse zugewandten Endbereichen 2, 3 in äußeren Lagern bzw. Führungslagern lagerbar und mit Radträgern der Fahrzeugachse verbindbar.

In mittleren Bereichen 4, 5 der Querblattfeder 1 ist diese über Zentrallager, die in Fig. 1 nicht näher dargestellt sind, direkt mit einem Fahrzeugaufbau oder mit einem mit dem Fahrzeugaufbau wiederum verbundenen Hilfsrahmen in Wirkverbindung bringbar und an diesem lagerbar. Die Zentrallager bzw. Lagervorrichtungen sind symmetrisch zur Mitte der Querblattfeder 1 angeordnet und verbinden diese in Einbaulage der Querblattfeder 1 mit dem Fahrzeugaufbau des Fahrzeuges, wobei Drehungen der Querblattfeder 1 im Bereich der Lagervorrichtungen bei gleich- und wechselseitigen Federungen im erforderlichen Umfang möglich sind, damit über die Querblattfeder 1 bei einem gleichseitigen und bei einem wechselseitigen Einfedern in den Endbereichen unterschiedliche Federraten zur Verfügung stellbar sind.

Die Lagervorrichtungen weisen in Fahrzeugquerrichtung eine hohe Lagersteifigkeit auf und verformen sich in Fahrzeugquerrichtung während des Betriebes eines mit der Querblattfeder 1 und den Lagervorrichtungen ausgeführten Fahrzeuges nur geringfügig, um neben der vorbeschriebenen Federungsfunktionalität auch Radführungsaufgaben übernehmen zu können. Die hohe Lagersteifigkeit der Lagervorrichtungen in Fahrzeugquerrichtung bietet zudem die Möglichkeit, eine Gesamtverschiebung der Querblattfeder 1 in Fahrzeugquerrichtung auf einfache Art und Weise zu vermeiden.

Damit der jeweils zwischen den Lagervorrichtungen und der Querblattfeder 1 für die einwandfreie Funktionalität der Querblattfeder 1 erforderliche Kraftschluss herstellbar ist, sind die beiden Lagervorrichtungen auch in Fahrzeughochrichtung mit einer entsprechend hohen Lagersteifigkeit ausgeführt. Außerdem wird durch die hohe Lagersteifigkeit der Lagervorrichtungen in Fahrzeughochrichtung erreicht, dass die Querblattfeder 1 bei wechselseitiger Einfederung der Endbereiche 2, 3 nicht das Verschieben eines Starrkörpers im Bereich der Lagervorrichtungen aufweist.

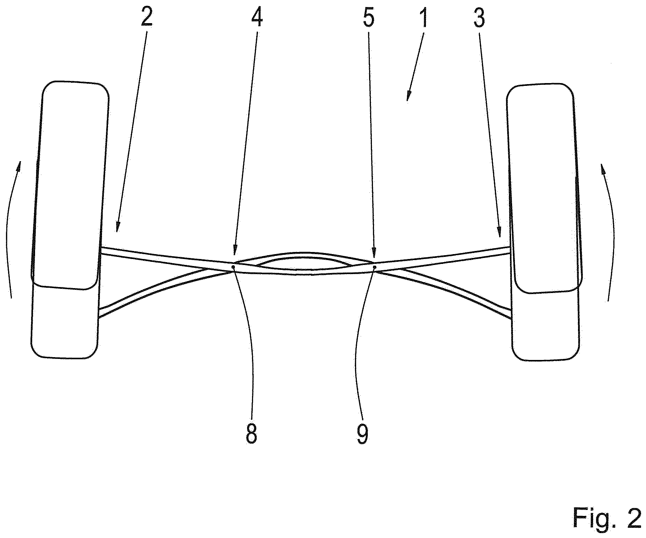

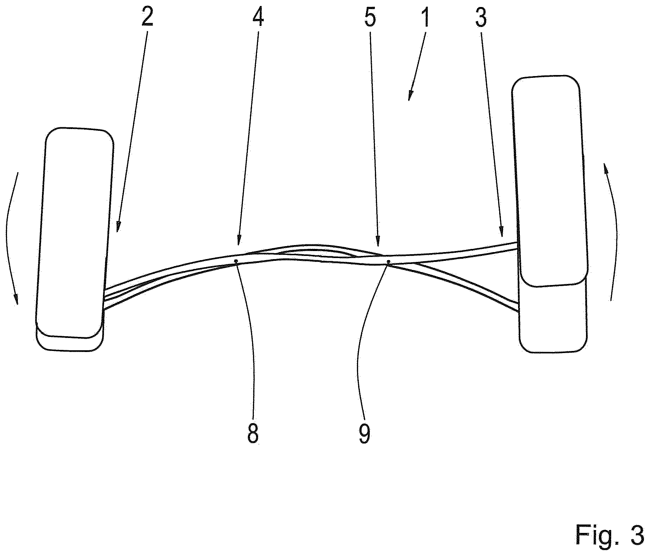

Fig. 2 zeigt eine Gegenüberstellung der Querblattfeder 1 in der Ruhestellung der Querblattfeder 1 und in einem Betriebszustand, zu dem die beiden Endbereiche 2 und 3 der Querblattfeder 1 in gleichem Umfang eingefedert sind. Im Unterschied hierzu zeigt Fig. 3 eine Gegenüberstellung der Querblattfeder in ihrer Ruhestellung und in einem wechselseitigen Federbetriebszustand, zu der der Endbereich 2 der Querblattfeder 1 aus der Ruheposition ausgefedert und der Endbereich 3 der Querblattfeder 1 aus der Ruheposition heraus eingefedert ist. Die Querblattfeder wird wie in Fig. 3 dargestellt bei einer wechselseitigen Einfederung einem sogenannten S-Schlag entsprechend gezielt verformt und stellt eine entsprechend höhere wechselseitige Federrate zur Verfügung.

Über die als ein balkenähnliches Federelement ausgebildete und aus einem Faserverbundwerkstoff hergestellte Querblattfeder 1 ist neben einer Hubfederung auch eine Wankfederung zur Verfügung stellbar, womit konventionelle Aufbaufedern sowie aus der Praxis bekannte Stabilisatoreinrichtungen nicht vorzusehen sind.

In Abhängigkeit des jeweils vorliegenden Federungsbetriebszustandes der Querblattfeder 1 wird eine in Einbaulage der Querblattfeder im Wesentlichen in Fahrzeughoch- und Fahrzeuglängsrichtung verlaufende Querschnittsebene 6 bzw. 7 der Querblattfeder 1 im Bereich der Lagervorrichtung bzw. der mittleren Bereiche 4, 5 der Querblattfeder 1 beim Ein- und Ausfedern der Querblattfeder 1 um eine im Wesentlichen in Fahrzeuglängsrichtung verlaufende Drehachse 8, 9 verschwenkt, wobei die Lage der Drehachsen 8, 9 in Fig. 1 idealisiert im Bereich der neutralen Faser der Querblattfeder 1 angegeben ist. Die Querschnittsebene 6, 7 ist dabei in montiertem Betriebszustand in Ruhelage der Querblattfeder 1 gegenüber der Fahrzeughochachse um einige Winkelgrade geringfügig verschwenkt, da die Querblattfeder 1 in Einbaulage und in Ruhelage in der in Fig. 1 gezeigten Art und Weise gebogen und mit Vorspannung am Fahrzeug befestigt ist.

Da die Querschnittsflächen 6 und 7 der mittleren Bereiche 4 und 5 der Querblattfeder 1 im Betrieb eines Fahrzeuges bei vergleichbaren Lastsituationen und vergleichbaren Federbetriebszuständen im Wesentlichen im gleichen Umfang verschwenkt werden, wird in der nachfolgenden Beschreibung lediglich auf die Querschnittsfläche 6 des mittleren Bereiches 4 der Querblattfeder 1 Bezug genommen.

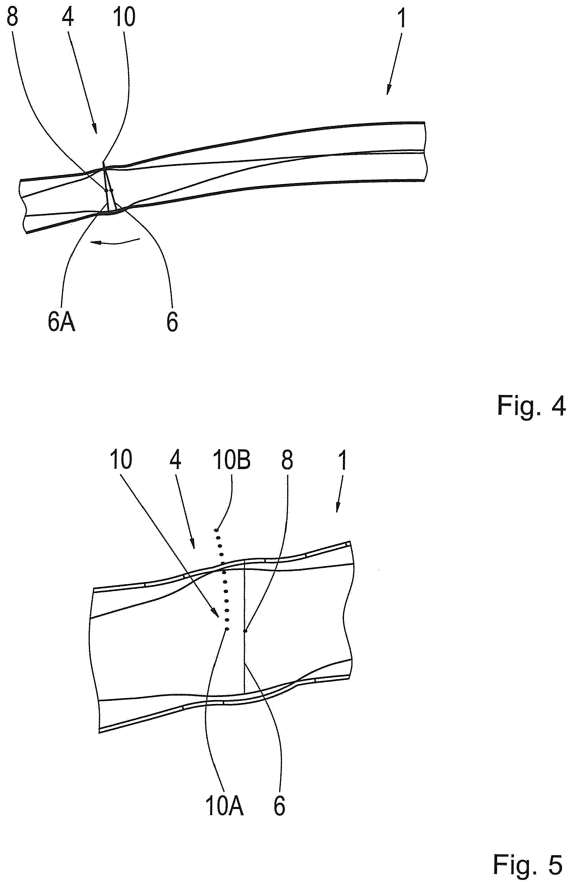

Fig. 4 zeigt einen den mittleren Bereich 4 umfassenden Abschnitt der Querblattfeder 1 im Ruhebetriebszustand und in einem Federungsbetriebszustand, zu dem die Querschnittsfläche 6 aus der zu dem Ruhebetriebszustand äquivalenten Lage um eine mit dem aktuellen Lastzustand korrespondierende reale Drehachse 10 in die zum Federungsbetriebszustand äquivalente Position verschwenkt ist, die in Fig. 4 unter dem Bezugszeichen 6A näher bezeichnet ist. Die lastabhängig verschwenkte Querschnittsfläche 6A des mittleren Bereiches 4 der Querblattfeder 1 resultiert aus einer Rotation und einer Translation der Querschnittsfläche 6 während des Einfederns der Querblattfeder 1. Dabei stellt die reale Drehachse 10 den Momentanpol der Querschnittsfläche 6 dar, um den die Querschnittsfläche 6 in die unter 6A näher bezeichnete Lage verschwenkt wird.

In Fig. 5 ist wiederum ein den mittleren Bereich 4 umfassender Abschnitt der Querblattfeder 1 im Ruhezustand und in einem Federungsbetriebszustand gezeigt, der sich bei einem gleichseitigen Einfedern der Endbereiche 2 und 3 der Querblattfeder 1 einstellt. Neben der theoretischen Drehachse 8 zeigt Fig. 5 mehrere reale Drehachsen 10 bzw. Momentanpole der Querschnittsfläche 6 der Querblattfeder 1 im mittleren Bereich 4, die sich bei gleichseitigem Ein- oder Ausfedern der Endbereiche 2 und 3 der Querblattfeder 1 einstellen. Dabei wird die Querschnittsfläche 6 um die unterste reale Drehachse 10A verschwenkt, wenn die beiden Endbereiche 2 und 3 maximal eingefedert sind. Im Unterschied hierzu wird die Querschnittsfläche 6 der Querblattfeder 1 im mittleren Bereich 4 um die obere reale Drehachse 10B verschwenkt, wenn die beiden Endbereiche 2 und 3 maximal ausfedern. Die jeweils zwischen der unteren realen Drehachse 10A und der oberen realen Drehachse 10B gezeigten Drehachsen der Querschnittsfläche 6 stellen jeweils dann die Momentanpole der Querschnittsfläche 6 während sogenannter Zwischenbetriebszustände der Querblattfeder 1 zwischen einem maximalen Einfederungsbetriebszustand und einem maximalen Ausfederungsbetriebszustand dar. Aus der Darstellung gemäß Fig. 5 geht zusätzlich hervor, dass zwischen der realen Drehachse 10A und der theoretischen Drehachse 8 ein minimaler Offset vorliegt, während die reale Drehachse 10B einen maximalen Abstand zur theoretischen Drehachse 8 aufweist.

Da herkömmliche Lagervorrichtungen konstruktiv derart auf die Querblattfeder 1 abgestimmt sind, dass bei einer Schwenkbewegung bzw. Drehbewegung der Querschnittsfläche 6 im mittleren Bereich 4 der Querblattfeder 1 um die theoretische Drehachse 8 keine oder nur geringe Zwangskräfte im Bereich der Querblattfeder 1 erzeugt werden, führen die lastbedingten Abstände zwischen den realen Drehachsen 10A bis 10B und der theoretischen Drehachse 8 in Fahrzeughochrichtung dazu, dass im Bereich der Querblattfeder 1 mit steigender Abweichung zwischen den realen Drehachsen 10A bis 10B und der theoretischen Drehachse 8 zunehmend Zwangskräfte in die Querblattfeder 1 eingeleitet werden, die eine Lebensdauer der Querblattfeder 1 in unerwünschtem Umfang beeinträchtigen.

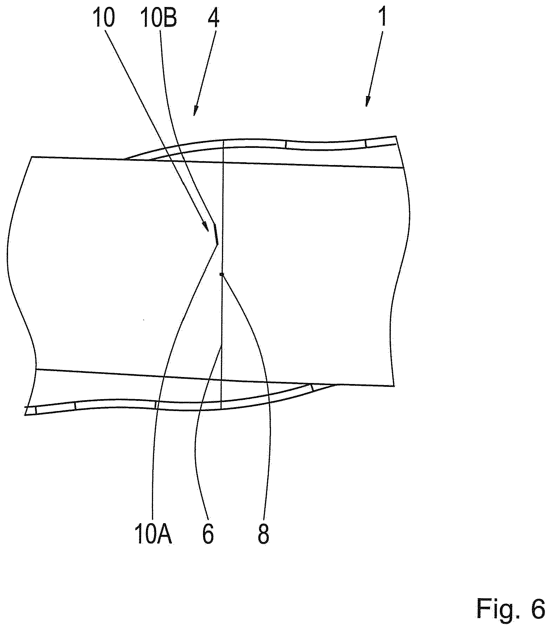

Auch bei einem wechselseitigen Federbetriebszustand der Querblattfeder 1, zu dem der Endbereich 2 einfedert und der gegenüberliegende Endbereich 3 ausfedert oder der Endbereich 2 ausfedert und der gegenüberliegende Endbereich 3 einfedert, sind die realen Drehachsen 10A bis 10B von der theoretischen Drehachse 8 der Querschnittsfläche 6 der Querblattfeder 1 in in Fig. 6 näher dargestelltem Umfang voneinander beabstandet. Die Abweichung zwischen den realen Drehachsen 10A bis 10B und der theoretischen Drehachse 8 ist bei wechselseitigen Federungsbetriebszuständen aufgrund der konträr wirkenden Effekte, das heißt dem einseitigen Strecken und dem auf der anderen Seite der Querblattfeder auftretenden Kürzen der Länge der Querblattfeder 1 in Fahrzeugquerrichtung, geringer als bei Vorliegen gleichseitiger Federungsbetriebszustände der Querblattfeder 1. Dennoch liegt auch bei wechselseitigen Federungsbetriebszuständen der Querblattfeder 1 ein deutlicher Offset zwischen den realen Drehachsen 10A bis 10B und der theoretischen Drehachse 8 der Querblattfeder 1 vor, der bei einem auf die theoretische Drehachse 8 abgestimmtem Lagerdesign Zwangskräfte im Bereich der Querblattfeder 1 verursacht, die die Lebensdauer der Querblattfeder 1 unter Umständen nachteilig beeinflussen.

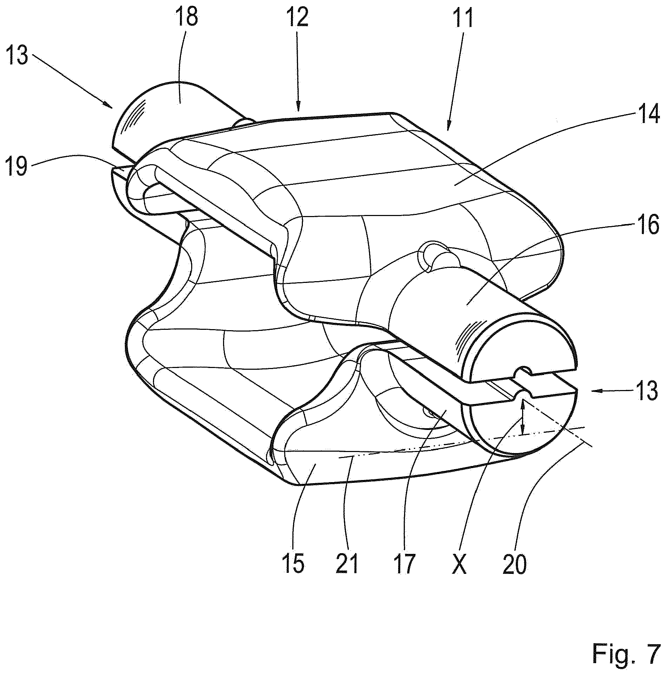

Fig. 7 zeigt eine erste Ausführungsform einer im Bereich einer Fahrzeugachse eines Fahrzeuges montierbaren Lagervorrichtung 11, die eine Halteeinrichtung 12 zum Halten der Querblattfeder 1 und eine Verbindungseinrichtung 13 umfasst, in deren Bereich die Halteeinrichtung 12 mit dem Fahrzeug verbindbar ist. Die Halteeinrichtung 12 und die Verbindungseinrichtung 13 sind so ausgeführt, dass die theoretische Drehachse 8 nicht wie in vorbeschriebenem Umfang durch die neutrale Faser der Querblattfeder 1 verläuft, sondern zu dieser beabstandet ist. Damit ist ein Abstand zwischen der theoretischen Drehachse 8 der Querschnittsebene 6 der Querblattfeder 1 und den im Betrieb auftretenden realen Drehachsen 10A bis 10B der Querschnittfläche 6 in einem Umfang verändert, dass die im Betrieb in der Querblattfeder 1 auftretenden Zwangskräfte im Bereich der Lagervorrichtung 11 lediglich in einem Umfang vorliegen, der eine Lebensdauer der Querblattfeder 1 im günstigsten Fall nicht beeinträchtigt.

Die Halteeinrichtung 12 der Lagervorrichtung 11 gemäß Fig. 7 umfasst zwei miteinander verbindbare Halbschalen 14, 15, die die Querblattfeder 1 zumindest bereichsweise formschlüssig umgreifen, wobei die Halbschalen 14 und 15 jeweils mit Teilbereichen der Verbindungseinrichtung 13 gekoppelt sind. Die Verbindungseinrichtung 13 umfasst jeweils mit den Halbschalen 14, 15 verbundene und halbzylindrisch ausgeführte sowie sich in Einbaulage der Querblattfeder 1 von dieser in Fahrzeuglängsrichtung weg ersteckende Verbindungsbereiche 16, 17 bzw. 18, 19, die in montiertem Zustand der Halteeinrichtung 12 mit ihren flachen Seiten aneinander anliegen und einen zylindrischen Bereich ausbilden. Mittellinien 20 der zylindrischen Bereiche 16, 17 und 18, 19 sind in Einbaulage der Querblattfeder 1 in Fahrzeughochrichtung um einen Wert X versetzt zu einer Symmetrieebene 21 der Halteeinrichtung vorgesehen, die im Wesentlichen durch die neutrale Faser der Querblattfeder 1 verläuft, und definieren die Lage der theoretischen Drehachse 8 der Querschnittsfläche 6 der Querblattfeder 1.

Auf die die zylindrischen Bereiche der Verbindungseinrichtung 13 bildenden halbzylindrischen Verbindungsbereiche 16, 17 und 18, 19 werden vorliegend hohlzylindrisch ausgeführte zusätzliche Verbindungsbereiche der Verbindungseinrichtung 13 aufgepresst, die mit höherer Elastizität als die Verbindungsbereiche 16, 17 und 18, 19 ausgeführt sind und die vorzugsweise aus gummielastischen Kunststoff hergestellt sein können. Wiederum auf die gummielastischen zusätzlichen Verbindungsbereiche werden weitere Verbindungsbereiche der Verbindungseinrichtung 13 montiert, in deren Bereich die Lagervorrichtung 11 mit dem Fahrzeug verbunden ist. Damit werden im Betrieb der Querblattfeder 1 auftretende Ein- und Ausfederbewegungen und daraus resultierende Drehbewegungen der Querblattfeder 1 im Bereich der Lagervorrichtung 11 bzw. im Bereich der gummielastisch ausgeführten zusätzlichen Verbindungsbereiche ermöglicht, ohne dabei die gewünschten Radführungsfunktionen bei gleichzeitig geringen Zwangskräften im Bereich der Querblattfeder 1 zu beeinträchtigen.

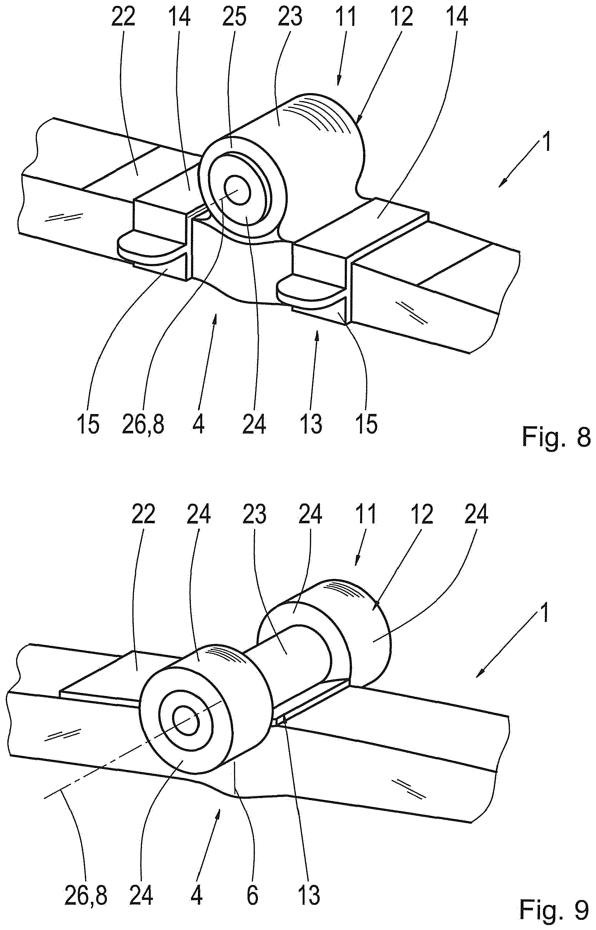

Fig. 8 zeigt eine zweite Ausführungsform der Lagervorrichtung 11, bei der die Verbindungseinrichtung 13 in Einbaulage der Querblattfeder 1 über einer Oberseite 22 der Querblattfeder 1 mit der Halteeinrichtung 12 in Wirkverbindung steht. Die Verbindungseinrichtung 13 gemäß Fig. 8 umfasst einen mit der Halteeinrichtung 12 verbundenen Verbindungsbereich 23, der vorliegend hohlzylindrisch und mit hoher Bauteilsteifigkeit ausgebildet ist. Ein weiterer Verbindungsbereich 24 ist ebenfalls hohlzylindrisch bzw. als Hülse ausgeführt und vom Verbindungsbereich 23 umgriffen bzw. innerhalb diesem angeordnet. Zwischen dem Verbindungsbereich 23 und dem weiteren Verbindungsbereich 24, der ebenfalls mit hoher Bauteilsteifigkeit ausgeführt ist, ist ein mit höherer Bauteilelastizität als der Verbindungsbereich 23 und als der weitere Verbindungsbereich 24 ausgeführter zusätzlicher Verbindungsbereich 25 vorgesehen, um Bewegungen der Querblattfeder 1 bei möglichst geringen Zwangskräften zu ermöglich und gleichzeitig die gewünschten Radführungsfunktionen über die Querblattfeder zur Verfügung stellen zu können. Die Lagervorrichtung 11 ist über den weiteren Verbindungsbereich 24 mit dem Fahrzeugaufbau verbunden, wobei eine Mittellinie 26 der Verbindungsbereiche 23 bis 25 die Lage der theoretischen Drehachse 8 der Querschnittsfläche 6 der Querblattfeder 1 definiert.

Fig. 9 zeigt ein drittes Ausführungsbeispiel der Lagervorrichtung 11, das wie das zweite Ausführungsbeispiel der Lagervorrichtung 11 gemäß Fig. 8 als sogenanntes Rundlager ausgeführt ist. Bei der Ausführung der Lagervorrichtung 11 gemäß Fig. 9 ist die Verbindungseinrichtung 13 in Einbaulage der Querblattfeder 1 in Fahrzeuglängsrichtung bereichsweise vor und hinter der Querblattfeder 1 angeordnet. Dabei erstreckt sich der mit der Halteeinrichtung 12, die im Wesentlichen wie die Halteeinrichtung 12 gemäß Fig. 8 ausgeführt ist und die in Fig. 9 nur teilweise gezeigt ist, wirkverbundene Verbindungsbereich 23 der Verbindungseinrichtung 13 in Fahrzeuglängsrichtung jeweils über die Querblattfeder 1 hinaus. Über die die Querblattfeder 1 in Fahrzeuglängsrichtung übergreifenden Endbereiche des Verbindungsbereiches 23 sind die hohlzylindrisch bzw. hülsenartig ausgeführten zusätzlichen Verbindungsbereiche 24, die wiederum gummielastisch ausgeführt sind, geschoben und umgreifen den Verbindungsbereich 23. Auf die zusätzlichen Verbindungsbereiche 24 sind wiederum weitere Verbindungsbereiche 25 montiert, in deren Bereich die Lagervorrichtung 11 mit der Fahrzeugkarosserie oder einem Achsträger verbindbar sind. Die Lage der theoretischen Drehachse 8 der Querschnittsfläche 6 der Querblattfeder 1 ist wiederum durch die Mittellinie 26 bzw. die Symmetrielinie der Lagervorrichtung 11 definiert, wobei mit der dritten Ausführungsform der Lagervorrichtung 11 gemäß Fig. 9 geringere Abstände zwischen der außermittigen Lage der theoretischen Drehachse 8 und der neutralen Faser der Querblattfeder 6 darstellbar sind als mit der zweiten Ausführung der Lagervorrichtung 11 gemäß Fig. 8.

Bei allen in der Zeichnung dargestellten Ausführungsformen der Lagervorrichtung 11 ist das Zentrum des Lagerdesigns der Lagervorrichtung 11 im Vergleich zu bekannten Lagervorrichtungen so verschoben, dass für die Querblattfeder 1 ein außermittiges Drehzentrum vorliegt, das wesentlich näher an den realen Drehachsen 10A bis 10B heranreicht, um eine Lebensdauer der Querblattfeder 1 beeinträchtigende Zwangskräfte im Bereich der Querblattfeder 1 in gewünschtem Umfang minimieren zu können. Dabei wird das Lagerdesign der Lagervorrichtung 11 vorteilhafterweise jeweils in den Bereich der realen Drehachse 10A bis 10B gelegt, zu der eine geringstmögliche Schädigung im Bereich der Querblattfeder 1 für eine Vielzahl verschiedener Lastfälle der Querblattfeder ermittelt wird.

### Bezugszeichen

- 1: Querblattfeder
- 2, 3: Endbereich der Querblattfeder
- 4, 5: mittlerer Bereich der Querblattfeder
- 6, 7: Querschnittsebene der Querblattfeder
- 6A: verschwenkter Betriebszustand der Querschnittsebene der Querblattfeder
- 8, 9: theoretische Drehachse
- 10: reale Drehachse
- 10A bis 10B: reale Drehachse
- 11: Lagervorrichtung
- 12: Halteeinrichtung
- 13: Verbindungseinrichtung
- 14, 15: Halbschale
- 16 bis 19: Verbindungsbereich
- 20: Mittellinie
- 21: Symmetrieebene der Halteeinrichtung
- 22: Oberseite der Querblattfeder
- 23: Verbindungsbereich
- 24: zusätzlicher Verbindungsbereich
- 25: weiterer Verbindungsbereich
- 26: Mittellinie
- X: Symmetrieebene

## Patentansprüche

1. Lagervorrichtung (11) einer Querblattfeder (1), die im Bereich einer Fahrzeugachse eines Fahrzeuges montierbar ist und mit einer Halteeinrichtung (12) zum Halten der Querblattfeder (1) und mit einer Verbindungseinrichtung (13) ausgebildet ist, in deren Bereich die Halteeinrichtung (12) mit dem Fahrzeug verbindbar ist, wobei die Halteeinrichtung (12), die Verbindungseinrichtung (13) und die Querblattfeder (1) so aufeinander abgestimmt sind, das eine in Einbaulage der Querblattfeder (1) im Wesentlichen in Fahrzeughoch- und Fahrzeuglängsrichtung verlaufende Querschnittsebene (6) der Querblattfeder (1) im Bereich der Lagervorrichtung (11) beim Ein- und Ausfedern der Querblattfeder (1) um eine im Wesentlichen in Fahrzeuglängsrichtung verlaufende Drehachse (8) verschwenkbar ist, wobei die Halteeinrichtung (12) und die Verbindungseinrichtung (13) so ausgeführt sind, dass die Drehachse (8) der Querschnittsebene (6) der Querblattfeder (1) im Bereich der Lagervorrichtung (11) in Fahrzeughochrichtung von der neutralen Faser der Querblattfeder (1) beabstandet ist, **dadurch gekennzeichnet, dass** die Halteeinrichtung (12) zwei miteinander verbindbare Halbschalen (14, 15) umfasst, die die Querblattfeder (1) zumindest bereichsweise formschlüssig umgreifen, wobei zumindest eine der Halbschalen (14, 15) mit der Verbindungseinrichtung (13) gekoppelt ist, wobei die Halbschalen der Halteeinrichtung mit Aussparungen zur Aufnahme von konvexen Bereichen der Querblattfeder ausgeführt sind.

2. Lagervorrichtung nach Anspruch 1, **dadurch gekennzeichnet, dass** die Verbindungseinrichtung (13) jeweils einen mit der Halteinrichtung (12) verbundenen Verbindungsbereich (23) und einen weiteren Verbindungsbereich (25) umfasst, über den die Verbindungseinrichtung (13) mit dem Fahrzeug in Wirkverbindung bringbar ist, wobei die Verbindungsbereiche (23, 25) über einen zusätzlichen Verbindungsbereich (24) miteinander gekoppelt sind, der mit höherer Elastizität als der Verbindungsbereich (23) und der weitere Verbindungsbereich (25) ausgeführt ist.

3. Lagervorrichtung nach einem der Ansprüche 1 oder 2, **dadurch gekennzeichnet, dass** die Verbindungseinrichtung (13) in Einbaulage der Querblattfeder (1) in Fahrzeughochrichtung zumindest bereichsweise über einer Oberseite (22) der Querblattfeder (1) angeordnet ist.

4. Lagervorrichtung nach einem der Ansprüche 1 bis 3, **dadurch gekennzeichnet, dass** die Verbindungseinrichtung (13) in Einbaulage der Querblattfeder (1) in Fahrzeuglängsrichtung zumindest bereichsweise vor und hinter der Querblattfeder (1) angeordnet ist.

5. Lagervorrichtung nach einem der Ansprüche 1 bis 4, **dadurch gekennzeichnet, dass** die Verbindungseinrichtung (13) jeweils mit den Halbschalen (14, 15) verbundene und halbzylindrisch ausgeführte und sich in Einbaulage der Querblattfeder (1) von dieser in Fahrzeuglängsrichtung weg erstreckende Verbindungsbereiche (16 bis 19) umfasst, die in montiertem Zustand der Halteeinrichtung (12) mit ihren flachen Seiten aneinander anliegen und einen zylindrischen Bereich ausbilden, wobei Mittellinien (20) der zylindrischen Bereiche in Einbaulage der Querblattfeder (1) in Fahrzeughochrichtung versetzt zu einer Symmetrieebene (21) der Halteeinrichtung (12) vorgesehen sind und eine Drehachse der Verbindungsbereiche (16 bis 19) gegenüber den weiteren Verbindungsbereichen darstellen.

6. Lagervorrichtung nach Anspruch 5, **dadurch gekennzeichnet, dass** auf dem zylindrischen Bereich der weitere zusätzliche Verbindungsbereich montiert ist, der als ein hohlzylindrisches Bauteil ausgeführt ist und vom weiteren Verbindungsbereich umgriffen ist.

7. Lagervorrichtung nach einem der Ansprüche 2 bis 5, **dadurch gekennzeichnet, dass** die Verbindungseinrichtung (12) wenigstens einen mit einer der Halbschalen (14) verbundenen und hohlzylindrisch ausgeführten und in Einbaulage der Querblattfeder (1) sich in Fahrzeuglängsrichtung erstreckenden Verbindungsbereich (23) umfasst, der den ebenfalls hohlzylindrischen weiteren Verbindungsbereich (25) sowie den dazwischen angeordneten zusätzlichen Verbindungsbereich (24), der auch hohlzylindrisch ausgebildet ist, umfasst.

8. Lagervorrichtung nach Anspruch 7, **dadurch gekennzeichnet, dass** der weitere Verbindungbereich (25) und der zusätzliche Verbindungsbereich (24) jeweils zwei in Fahrzeuglängsrichtung zueinander beabstandete Teilbereiche umfasst, wovon einer der Teilbereiche in Fahrzeuglängsrichtung vor der Querblattfeder (1) und der andere Teilbereich hinter der Querblattfeder (1) vorgesehen ist, und wobei die Teilbereiche des zusätzlichen Verbindungsbereiches (24) die Teilbereiche des weiteren Verbindungsbereiches (25) umgreifen und auf dem Verbindungsbereich (23) angeordnet sind, der als ein hohlzylindrisches Bauteil ausgeführt ist und sich in Fahrzeuglängsrichtung zwischen den Teilbereichen erstreckt.

## Claims

1. Bearing apparatus (11) of a transverse leaf spring (1), which bearing apparatus (1) can be mounted in the region of a vehicle axle of a vehicle and is configured with a holding device (12) for holding the transverse leaf spring (1) and with a connecting device (13), in the region of which the holding device (12) can be connected to the vehicle, the holding device (12), the connecting device (13) and the transverse leaf spring (1) being adapted to one another in such a way that a cross-sectional plane (6) of the transverse leaf spring (1), which cross-sectional plane (6) runs substantially in the vehicle vertical and vehicle longitudinal direction in the installed position of the transverse leaf spring (1), can be pivoted in the region of the bearing apparatus (11) during compression and rebound of the transverse leaf spring (1) about a rotational axis (8) which runs substantially in the vehicle longitudinal direction, the holding device (12) and the connecting device (13) being configured in such a way that the rotational axis (8) of the cross-sectional plane (6) of the transverse leaf spring (1) is spaced apart in the region of the bearing apparatus (11) in the vehicle vertical direction from the neutral axis of the transverse leaf spring (1), **characterized in that** the holding device (12) comprises two half shells (14, 15) which are connected to one another and engage around the transverse leaf spring (1) in a positively locking manner at least in regions, at least one of the half shells (14, 15) being coupled to the connecting device (13), the half shells of the holding device being configured with cut-outs for receiving convex regions of the transverse leaf spring.

2. Bearing apparatus according to Claim 1, **characterized in that** the connecting device (13) comprises in each case one connecting region (23) which is connected to the holding device (12) and a further connecting region (25), via which the connecting device (13) can be operatively connected to the vehicle, the connecting regions (23, 25) being coupled to one another via an additional connecting region (24) which is configured with a higher elasticity than the connecting region (23) and the further connecting region (25).

3. Bearing apparatus according to either of Claims 1 and 2, **characterized in that**, in the installed position of the transverse leaf spring (1), the connecting device (13) is arranged in the vehicle vertical direction at least in regions above an upper side (22) of the transverse leaf spring (1).

4. Bearing apparatus according to one of Claims 1 to 3, **characterized in that**, in the installed position of the transverse leaf spring (1), the connecting device (13) is arranged in the vehicle longitudinal direction at least in regions in front of and behind the transverse leaf spring (1).

5. Bearing apparatus according to one of Claims 1 to 4, **characterized in that** the connecting device (13) comprises connecting regions (16 to 19) which are connected in each case to the half shells (14, 15), are of semi-cylindrical configuration, extend away from the transverse leaf spring in the vehicle longitudinal direction in the installed position of the said transverse leaf spring (1), bear against one another with their flat sides in the mounted state of the holding device (12), and configure a cylindrical region, centre lines (20) of the cylindrical regions being provided offset with respect to a plane of symmetry (21) of the holding device (12) in the installed position of the transverse leaf spring (1), and representing a rotational axis of the connecting regions (16 to 19) with respect to the further connecting regions.

6. Bearing apparatus according to Claim 5, **characterized in that** the further additional connecting region which is configured as a hollow-cylindrical component and is engaged around by the further connecting region is mounted on the cylindrical region.

7. Bearing apparatus according to one of Claims 2 to 5, **characterized in that** the connecting device (12) comprises at least one connecting region (23) which is connected to one of the half shells (14), is of hollow-cylindrical configuration, extends in the vehicle longitudinal direction in the installed position of the transverse leaf spring (1), and comprises the further connecting region (25) which is likewise hollow-cylindrical and the additional connecting region (24) which is arranged in between and is also of hollow-cylindrical configuration.

8. Bearing apparatus according to Claim 7, **characterized in that** the further connecting region (25) and the additional connecting region (24) comprise in each case two part regions which are spaced apart from one another in the vehicle longitudinal direction, one of the part regions being provided in front of the transverse leaf spring (1) in the vehicle longitudinal direction and the other part region being provided behind the transverse leaf spring (1), and the part regions of the additional connecting region (24) engaging around the part regions of the further connecting region (25) and being arranged on the connecting region (23) which is configured as a hollow-cylindrical component and extends between the part regions in the vehicle longitudinal direction.

## Revendications

1. Dispositif de montage (11) pour un ressort à lame transversal (1), qui peut être monté dans la zone d'un essieu de véhicule d'un véhicule et qui est réalisé avec un dispositif de maintien (12) pour le maintien du ressort à lame transversal (1) et avec un dispositif de liaison (13), dans la région duquel le dispositif de maintien (12) peut être relié au véhicule, dans lequel le dispositif de maintien (12), le dispositif de liaison (13) et le ressort à lame transversal (1) sont accordés l'un à l'autre de telle manière qu'un plan de section transversale (6) du ressort à lame transversal (1) s'étendant en position de montage du ressort à lame transversal (1) essentiellement dans la direction verticale et dans la direction longitudinale du véhicule puisse pivoter dans la région du dispositif de montage (11), lors de l'enfoncement et de la détente du ressort à lame transversal (1), autour d'un axe de rotation (8) s'étendant essentiellement dans la direction longitudinale du véhicule, dans lequel le dispositif de maintien (12) et le dispositif de liaison (13) sont réalisés de telle manière que l'axe de rotation (8) du plan de section transversale (6) du ressort à lame transversal (1) soit distant de la fibre neutre du ressort à lame transversal (1) dans la direction verticale du véhicule dans la région du dispositif de montage (11), **caractérisé en ce que** le dispositif de maintien (12) comprend deux demi-coques (14, 15) pouvant être assemblées l'une à l'autre, qui entourent au moins localement par emboîtement le ressort à lame transversal (1), dans lequel au moins une des demi-coques (14, 15) est couplée au dispositif de liaison (13), dans lequel les demi-coques du dispositif de maintien sont réalisées avec des découpes destinées à recevoir des zones convexes du ressort à lame transversal.

2. Dispositif de montage selon la revendication 1, **caractérisé en ce que** le dispositif de liaison (13) comprend respectivement une zone de liaison (23) reliée au dispositif de maintien (12) et une autre zone de liaison (25), par laquelle le dispositif de liaison (13) peut être mis en liaison active avec le véhicule, dans lequel les zones de liaison (23, 25) sont couplées l'une à l'autre au moyen d'une zone de liaison supplémentaire (24), qui est réalisée avec une élasticité plus élevée que la zone de liaison (23) et que l'autre zone de liaison (25).

3. Dispositif de montage selon une des revendications 1 ou 2, **caractérisé en ce que** le dispositif de liaison (13) est disposé dans la position de montage du ressort à lame transversal (1), dans la direction verticale du véhicule, au moins localement au-dessus d'un côté supérieur (22) du ressort à lame transversal (1).

4. Dispositif de montage selon l'une quelconque des revendications 1 à 3, **caractérisé en ce que** le dispositif de liaison (13) est disposé dans la position de montage du ressort à lame transversal (1) au moins localement devant et derrière le ressort à lame transversal (1) dans la direction longitudinale du véhicule.

5. Dispositif de montage selon l'une quelconque des revendications 1 à 4, **caractérisé en ce que** le dispositif de liaison (13) comprend des zones de liaison (16 à 19) respectivement reliées aux demi-coques (14, 15) et réalisées sous forme semi-cylindrique et s'étendant dans la position de montage du ressort à lame transversal (1) à partir de celui-ci dans la direction longitudinale du véhicule, qui dans l'état monté du dispositif de maintien (12) s'appliquent l'une sur l'autre par leurs côtés plats et forment une zone cylindrique, dans lequel des lignes centrales (20) des zones cylindriques sont prévues dans la position de montage du ressort à lame transversal (1) en décalage dans la direction verticale du véhicule par rapport à un plan de symétrie (21) du dispositif de maintien (12) et représentent un axe de rotation des zones de liaison (16 à 19) par rapport aux autres zones de liaison.

6. Dispositif de montage selon la revendication 5, **caractérisé en ce que** l'autre zone de liaison supplémentaire est montée sur la zone cylindrique, qui est formée par un composant cylindrique creux et qui est entourée par l'autre zone de liaison.

7. Dispositif de montage selon l'une quelconque des revendications 2 à 5, **caractérisé en ce que** le dispositif de liaison (12) comprend au moins une zone de liaison (23) reliée à une des demi-coques (14) et réalisée sous forme cylindrique creuse et s'étendant dans la position de montage du ressort à lame transversal (1) dans la direction longitudinale du véhicule, et qui comprend l'autre zone de liaison également cylindrique creuse (25) ainsi que la zone de liaison supplémentaire (24) disposée entre celles-ci, qui est également cylindrique creuse.

8. Dispositif de montage selon la revendication 7, **caractérisé en ce que** l'autre zone de liaison (25) et la zone de liaison supplémentaire (24) comprennent chacune deux zones partielles espacées l'une de l'autre dans la direction longitudinale du véhicule, dont une des zones partielles est prévue devant le ressort à lame transversal (1) et l'autre zone partielle est prévue derrière le ressort à lame transversal (1) dans la direction longitudinale du véhicule, et dans lequel les zones partielles de la zone de liaison supplémentaire (24) entourent les zones partielles de l'autre zone de liaison (25) et sont disposées sur la zone de liaison (23), qui est réalisée sous la forme d'un composant cylindrique creux et qui s'étend entre les zones partielles dans la direction longitudinale du véhicule.
